# EUROPÄISCHE PATENTSCHRIFT

(11) **EP 2 822 728 B1**
(45) Veröffentlichungstag und Bekanntmachung des Hinweises auf die Patenterteilung: **08.08.2018**
(21) Anmeldenummer: 13702483.2
(22) Anmeldetag: 05.02.2013
(51) Int. Cl.: B23K 26/40, B23K 26/08, B23K 26/12, B32B 17/10, B32B 37/14, B32B 38/00, B32B 38/10

(54) **VERFAHREN ZUR HERSTELLUNG EINER VERBUNDGLASSCHEIBE MIT SENSORFENSTER**
METHOD FOR PRODUCING A LAMINATED GLASS PANE WITH SENSOR WINDOW
PROCÉDÉ DE FABRICATION D'UN VITRAGE FEUILLETÉ DOTÉ D'UNE FENÊTRE DE DÉTECTION

(30) Priorität: 05.03.2012 EP 12158021
(43) Veröffentlichungstag der Anmeldung: 14.01.2015
(73) Patentinhaber: Saint-Gobain Glass France, 92400 Courbevoie (FR)
(72) Erfinder: ROYER, Bastien, 53424 Remagen (DE); YEH, Li-Ya, 52511 Geilenkirchen (DE)
(74) Vertreter: Gebauer, Dieter Edmund
(86) Internationale Anmeldenummer: PCT/EP2013/052202
(87) Internationale Veröffentlichungsnummer: WO 2013/131698

(56) Entgegenhaltungen:
- EP-A1- 0 257 723
- EP-A1- 1 880 790
- EP-A1- 2 325 002
- AT-B- 409 430
- DE-A1-102008 038 118
- DE-U1-212005 000 055
- JP-A- 59 092 192
- JP-A- 61 262 187
- JP-A- 2004 298 885
- US-A- 5 227 608
- US-A- 5 501 944
- US-A1- 2001 006 766
- US-A1- 2003 075 531

## Beschreibung

Die vorliegende Erfindung betrifft ein Verfahren zur Herstellung einer Verbundglasscheibe mit Sensorfenster.

Im Zuge der steigenden Sicherheitsanforderungen an Fahrzeuge werden diese immer häufiger mit den verschiedensten optischen Sensoren ausgestattet. Dazu zählen unter anderem Sensoren in Parkhilfesystemen und Spurassistenten sowie Abstandssensoren. Diese Systeme sind in der Lage den Fahrer auch bei Nacht oder bei schwierigen Straßenverhältnissen vor Hindernissen zu warnen. Gerade bei schlechter Sicht kann der Fahrer kaum rechtzeitig auf Fußgänger oder andere Fahrzeuge reagieren, die plötzlich vor dem Fahrzeug auftauchen. Kamerasysteme erkennen derartige Hindernisse rechtzeitig und warnen den Fahrer. Vor allem bei hohen Geschwindigkeiten ist die Einschätzung des richtigen Sicherheitsabstands für den Fahrer schwierig. Durch elektronische Distanzmessung und automatische Warnung des Fahrers bei zu geringem Sicherheitsabstand können Auffahrunfälle effektiv verhindert werden. Der Einsatz derartiger Hilfssysteme kann aktiv die Sicherheit im Straßenverkehr verbessern. Diese Hilfssysteme arbeiten mit Kameras, Nachtsichtkameras, Restlichtverstärkern, Infrarotdetektoren oder Laserentfernungsmessern. Die nach vorne gerichteten Sensoren sind dabei üblicherweise hinter der Windschutzscheibe angeordnet um sie vor Umwelteinflüssen zu schützen.

Neben sicherheitsrelevanten Aspekten sind auch ökologische Gesichtspunkte und der Fahrzeugkomfort von besonderer Bedeutung. Der Schadstoffausstoß und somit auch der Kraftstoffverbrauch sollten möglichst minimiert werden. Gerade nach langen Standzeiten bei direkter Sonneneinstrahlung ist der Energieverbrauch der Klimaanlage hoch. Dies führt zu einem erhöhten Kraftstoffverbrauch und Schadstoffausstoß. Des Weiteren beeinträchtigt eine starke Erwärmung des Fahrzeuginnenraums den Komfort der Insassen. Die Erwärmung des Fahrzeuginnenraums kann durch den Einsatz von Verbundglasscheiben mit Sonnenschutzbeschichtung vermindert werden. Derartige Verbundglasscheiben filtern den Infrarotanteil des Sonnenlichtes. Dazu werden vor allem Polyesterfolien im Folienverbund der Verbundglasscheibe verwendet. Bevorzugt wird dabei eine PET-Folie eingesetzt, die zwischen zwei PVB-Folien eingelegt wird, wobei die PET-Folie mit einer IR-Strahlung reflektierenden Beschichtung ausgestattet ist. Zu diesem Zweck werden metallbeschichtete PET-Folien oder andere Polyesterfolien verwendet. Bevorzugt wird eine Silberbeschichtung eingesetzt. Alternativ können auch Beschichtungen aufgebracht werden, die andere Teile des elektromagnetischen Spektrums reflektieren, wie beispielsweise UV-Strahlung. Neben solchen Sonnenschutzbeschichtungen sind auch heizbare Beschichtungen in Verbundglasscheiben bekannt. In diesen heizbaren Beschichtungen werden ebenfalls metallbeschichtete Polyesterfolien im Folienverbund eingesetzt.

Die Anwendung solcher metallbeschichteter Folien im Folienverbund der Verbundglasscheibe ist in Kombination mit Kamerasystemen kaum möglich. Die Kamerasysteme nutzen sowohl Licht im sichtbaren Bereich des Spektrums als auch im infraroten und ultravioletten Wellenlängenbereich. Sonnenschutzbeschichtungen in Verbundglasscheiben filtern gewisse Anteile dieser Wellenlängenbereiche und erschweren damit den Einsatz von Kamerasystemen hinter der Scheibe. Die metallische Beschichtung des Folienverbunds muss somit im Bereich der Kamera entfernt werden. Solche Sensorfenster können beispielsweise durch Herausschneiden der PET-Folie an der entsprechenden Stelle des Folienverbunds geschaffen werden. Dadurch kommt es jedoch zur Faltenbildung an der Grenzfläche zwischen dem Sensorfenster ohne PET-Folie und der restlichen Scheibenfläche mit PET-Folie.

EP 1 605 729 A2 offenbart eine elektrisch beheizbare Verbundglasscheibe mit einem Sensorfenster hinter dem eine Kamera angebracht ist. Im Sichtbereich der Kamera wird die Verbundglasscheibe beheizt um die Bildung von Kondenswasser oder Eis in diesem Bereich zu verhindern. Dabei wird zunächst im Bereich des Sensorfensters ein Stück der Folienzwischenschicht der Verbundglasscheibe entfernt. In diesen Ausschnitt wird ein Heizelement eingesetzt, das auf ein passendes Stück der Folienzwischenschicht aufgebracht ist. Dieses Heizelement wird im Folienverbund der Verbundglasscheibe einlaminiert. Zusätzlich kann ein zweites Heizelement an der Scheibenoberfläche angebracht werden.

GB 2458986 offenbart eine Vorrichtung zur Strukturierung dünner Filme auf kontinuierlichen flexiblen Substraten. Das flexible Substrat liegt dabei in Rollenform vor. Auf der einen Seite der Vorrichtung wird das Substrat von einer Transportrolle abgerollt und auf der anderen Seite nach der Bearbeitung auf einer zweiten Transportrolle wieder aufgerollt. Die Bearbeitung der Substratoberfläche kann entweder durch Bedrucken mit einem Tintenstrahldrucker oder durch Strukturierung mittels eines Lasers erfolgen. Dazu wird das Substrat zwischen den beiden Transportrollen auf einem Vakuumtisch fixiert um eine Faltenbildung während der Bearbeitung zu verhindern. Der Druckkopf oder der Laser befinden sich senkrecht zur Folienoberfläche. Diese Vorrichtung ermöglicht es eine Beschichtung von der Oberfläche einer dünnen Folie mittels Lasern abzutragen.

EP 2 325 002 A1 offenbart ein Verfahren zur Herstellung einer Verbundglasscheibe mit Sensorfenster, wobei die Metallbeschichtung der Polymerfolie im Bereich des Sensorfensters mittels eines Laserverfahrens abgetragen wird. Die Polymerfolie muss dadurch im Bereich des Sensorfensters nicht beschnitten werden. So wird die Faltenbildung an den Rändern des Sensorfensters vermieden und es treten in diesem Bereich keine optischen Unregelmäßigkeiten auf.

Die US 2003/075531 A1 zeigt eine Anordnung, bei der ein Substrat mittels Laser entschichtet wird, wobei der Laser durch das Substrat hindurch tritt, bevor er auf die Beschichtung trifft. Um eine Eindiffusion in das Substrat zu vermeiden, werden beim Lasern entstehenden Metallionen der Beschichtung abgesaugt oder weggeblasen.

Bei den bisher bekannten Verfahren zum Lasern einer metallbeschichteten Polymerfolie wird die Polymerfolie auf einem Vakuumtisch fixiert und mittels eines Lasers bearbeitet, wobei der Laser durch den Polymerfilm auf den Vakuumtisch trifft. Der Laser beschädigt dabei allerdings den Vakuumtisch und trägt Metallpartikel von der Tischoberfläche ab. Diese Metallpartikel haften sehr leicht an der Oberfläche der Folien. Beim Aufrollen der bearbeiteten beschichteten Polymerfolie geraten die anhaftenden Metallpartikel in die Zwischenräume der aufgerollten Folie. Auf diese Weise kommen die Metallpartikel auch mit der Beschichtung der beschichteten Polymerfolie in Berührung und beschädigen diese. Derartige Schäden und Kratzer in der Beschichtung sind nicht nur als optische Fehler im fertigen Produkt sichtbar, sondern begünstigen auch eine Korrosion der Beschichtung. Aus diesem Grund ist eine Beschädigung der Beschichtung unbedingt zu vermeiden. Deshalb muss der Vakuumtisch regelmäßig gereinigt werden um diese Metallpartikel zu entfernen. Alternativ kann auch eine Schutzfolie zwischen Polymerfilm und Vakuumtisch einlegt werden, wobei die Metallpartikel an der Schutzfolie haften und nicht mit der Polymerfolie in Berührung kommen. Das Auftragen der Schutzfolie bzw. das Reinigen des Vakuumtisches stellen einen zusätzlichen manuellen Arbeitsschritt dar, wodurch der Produktionsprozess verlangsamt wird.

Die Aufgabe der vorliegenden Erfindung liegt darin ein Verfahren zur Herstellung einer Verbundglasscheibe mit mindestens einem Sensorfenster bereitzustellen, das eine vollautomatisierte Bearbeitung der Polymerfolien mit Laser ermöglicht, bei der der Vakuumtisch nicht durch den Laserstrahl beschädigt wird und keine Reinigung des Vakuumtisches notwendig ist.

Die Aufgabe der vorliegenden Erfindung wird erfindungsgemäß durch ein Verfahren zur Herstellung einer Verbundglasscheibe mit mindestens einem Sensorfenster und einer Vorrichtung zur Bearbeitung von Polymerfolien mittels Lasern gemäß der unabhängigen Ansprüche gelöst. Bevorzugte Ausführungsformen der Erfindung gehen aus den Unteransprüchenhervor.

Das Verfahren zur Herstellung einer Verbundglasscheibe mit Sensorfenster umfasst die Bearbeitung einer beschichteten Polymerfolie mittels Lasern auf einem mit Glasplatten belegten Vakuumtisch sowie die Herstellung einer Verbundglasscheibe unter Verwendung dieser bearbeiteten beschichteten Polymerfolie. Die beschichtete Polymerfolie wird in einem ersten Schritt mit der Beschichtung nach oben zeigend auf den Vakuumtisch aufgelegt und durch Anlegen eines Unterdrucks gespannt. Nach oben zeigend ist dabei im Sinne von "vom Vakuumtisch weg zeigend" zu verstehen. Dabei liegt die unbeschichtete Seite der Polymerfolie oder die nicht zu bearbeitende Seite der Polymerfolie direkt auf der Oberfläche des Vakuumtisches auf. Die Beschichtung der beschichteten Polymerfolie, die mittels der Laser bearbeitet werden soll, weist hingegen in Richtung der Laser und zeigt somit nach Auflegen der Polymerfolie auf dem Vakuumtisch nach oben von diesem Vakuumtisch weg. Im Bereich der Glasplatten wird auf der beschichteten Polymerfolie im Bereich der Glasplatten durch Lasern ein entschichteter Bereich erzeugt. In diesem entschichteten Bereich wurde die Beschichtung der beschichteten Polymerfolie mittels Lasern abgetragen. Die bearbeitete beschichtete Polymerfolie mit entschichtetem Bereich wird daraufhin in den Folienverbund einer Verbundglasscheibe eingesetzt. Dazu wird auf eine Grundscheibe eine erste Laminierfolie und auf die erste Laminierfolie die beschichtete Polymerfolie mit entschichtetem Bereich aufgelegt. Auf die beschichtete Polymerfolie wird eine zweite Laminierfolie gelegt und der Folienstapel mit einer Deckscheibe abgeschlossen. Diese Anordnung wird daraufhin zunächst in einem Kunststoffsack vorevakuiert und danach im Autoklaven behandelt. Die Behandlung im Autoklaven erfolgt bei 50 °C bis 150 °C, bevorzugt 80 °C bis 120 °C und bei einem Druck von 5 bar bis 15 bar, bevorzugt 8 bar bis 13 bar, für einen Zeitraum von 1 Stunde bis 4 Stunden, bevorzugt 2 Stunden bis 3 Stunden.

Die Grundscheibe und die Deckscheibe enthalten Kalk-Natron-Glas, Quarzglas, Borsilikatglas oder Polymethylmethacrylat.

Die Grundscheibe und die Deckscheibe weisen eine Dicke auf von 1 mm bis 20 mm, bevorzugt 2 mm bis 6 mm.

Der Vakuumtisch zu Fixierung der beschichteten Polymerfolie umfasst einen Schwenkarm, eine auf dem Schwenkarm montierte untere Platte und eine auf der unteren Platte befestigte obere Platte. Die untere Platte und die obere Platte sind dabei über ihre Anordnung relativ zum Schwenkarm des Vakuumtisches definiert. Auch bei einer Drehung des Schwenkarms ist somit die unmittelbar auf dem Schwenkarm montierte Platte als untere Platte und die auf der unteren Platte angebrachte Platte als obere Platte definiert. Der Schwenkarm ermöglicht eine genaue Annäherung des Vakuumtisches an die Folienoberfläche. Wenn kein Unterdruck angelegt ist berührt die Polymerfolie den Vakuumtisch nicht, so dass die Folie bei einem Transport durch Transportrollen nicht verkratzt. Der Abstand des Vakuumtisches zur Folienoberfläche sollte jedoch auch nicht zu groß sein, damit die Folie beim Anlegen des Unterdrucks vollständig an die Tischoberfläche angesaugt wird. Außerdem kann der Vakuumtisch über den Schwenkarm seitlich entfernt werden, wodurch ein einfacher Wechsel der oberen Platte des Vakuumtisches möglich ist.

Der Vakuumtisch enthält eine Metall- oder Keramikplatte als obere Platte, in der Löcher angebracht sind, die als Vakuumdüsen fungieren. Die Metallplatte enthält bevorzugt Aluminium. Bei Verwendung von Keramikplatten können auch poröse Materialien eingesetzt werden, so dass keine zusätzlichen Löcher in die obere Platte eingebracht werden müssen.

Der Vakuumtisch ist bevorzugt senkrecht angeordnet, da so die für die Anlage benötigte Standfläche miniert und die Anlage möglichst platzsparend aufgebaut werden kann. Der Normalenvektor der Ebene des Vakuumtisches ist dabei horizontal ausgerichtet. Auch bei einer solchen senkrechten Anordnung des Vakuumtisches bleiben die relative Anordnung der unteren Platte und der oberen Platte zum Schwenkarm, sowie die Anordnung der beschichteten Polymerfolie relativ zum Vakuumtisch erhalten. Des Weiteren kann eine senkrechte Anordnung des Vakuumtisches die weitere Verarbeitung der beschichteten Polymerfolie vereinfachen. Wenn die Weiterverarbeitung beispielsweise in einem darüberliegenden Stockwerk erfolgt kann die Folie nach der Laserbehandlung über Transportrollen senkrecht nach oben in die nächste Etage transportiert werden.

Die Glasplatten werden in Ausfräsungen der oberen Platte des Vakuumtisches eingelegt. Dazu werden Vertiefungen in die obere Platte des Vakuumtisches gefräst, die in ihrer Form und Größe den Glasplatten entsprechen. Die Tiefe der Ausfräsungen ergibt sich dabei durch die Dicke der Glasplatten. Die Glasplatten müssen passgenau gearbeitet werden, da am Übergang zwischen Glasplatte und Vakuumtisch nach dem Einsetzen der Platten keine Kante zurückbleiben darf. Unregelmäßigkeiten in der Oberfläche des Vakuumtisches würden beim Anlegen des Unterdrucks zu einer Beschädigung der beschichteten Polymerfolie führen. Die Position der Glasplatten hängt von der Position der Sensorfenster der späteren Verbundglasscheibe ab, da die Glasplatten nur im zu bearbeitenden Bereich der beschichteten Polymerfolie auf den Vakuumtisch aufgebracht werden. Die Glasplatten sind nur auf der abnehmbaren oberen Platte des Vakuumtisches befestigt. Somit kann ein einzelner Vakuumtisch durch einen einfachen Wechsel der oberen Platte für die verschiedensten Scheibenmodelle verwendet werden.

Die Befestigung der Glasplatten erfolgt über einen Klebstoff, bevorzugt aus der Gruppe Epoxidharze, Polyurethanklebstoff, Silikone, Cyanacrylat-Klebstoffe und/oder Gemischen davon, besonders bevorzugt Epoxidharze. Alternativ können die Glasplatten auch über ein Haftband befestigt werden. Die Glasplatten verhindern überraschenderweise eine Beschädigung des Vakuumtisches und somit auch die Bildung von Metallpartikeln, die an der beschichteten Polymerfolie haften und diese beschädigen.

Die Glasplatten enthalten Kalk-Natron-Glas, Quarzglas, Borsilikatglas, bevorzugt wird Floatglas eingesetzt.

Die Glasplatten weisen eine Dicke auf von 1 mm bis 10 mm, bevorzugt 2 mm bis 6 mm.

Die beschichtete Polymerfolie wird über zwei Transportrollen ober- und unterhalb des Vakuumtisches abschnittsweise ab- und aufgerollt, so dass nur der zu bearbeitende Abschnitt der Folie im abgerollten Zustand vorliegt. Die Begriffe oberhalb und unterhalb des Vakuumtisches beziehen sich dabei auf einen senkrecht angeordneten Vakuumtisch. Bei einer anderen Anordnung des Vakuumtisches sind die Transportrollen seitlich des Vakuumtisches angeordnet. Im Allgemeinen erfolgt die Platzierung der Transportrollen benachbart zum Vakuumtisch, wobei der Vakuumtisch so zwischen den Transportrollen liegt, dass die beschichtete Polymerfolie parallel zur Oberfläche des Vakuumtisches über die Transportrollen auf- und abgerollt werden kann. Die Folie kann somit direkt von der Rolle in einem kontinuierlichen Verfahren verarbeitet werden. Die sequentielle Bearbeitung verhindert des Weiteren eine Beschädigung der Folie, da die Folienoberfläche im aufgerollten Zustand optimal geschützt ist. Anstatt die beschichtete Polymerfolie nach der Bearbeitung wieder auf der oberen Transportrolle aufzurollen kann die Folie auch über eine Umlenkrolle der direkten Weiterverarbeitung zugeleitet werden.

Das Lasern der beschichteten Polymerfolie erfolgt indem zunächst ein Abschnitt der Polymerfolie von der unteren Transportrolle abgerollt und von der oberen Transportrolle aufgerollt wird und die Transportrollen angehalten werden. Die untere Transportrolle befindet sich bei einer senkrechten Anordnung des Vakuumtisches unterhalb des Vakuumtisches, während sich die obere Transportrolle oberhalb des Vakuumtisches befindet. Bei einer horizontalen Anordnung des Vakuumtisches sind die obere Transportrolle und die untere Transportrolle an gegenüberliegenden Kanten seitlich des Vakuumtisches angebracht. Die beschichtete Polymerfolie befindet sich daraufhin mit der Beschichtung nach oben zeigend über dem Vakuumtisch. Über Vakuumdüsen in der oberen Platte des Vakuumtisches wird ein Unterdruck angelegt und die Luft zwischen Vakuumtisch und beschichteter Polymerfolie entfernt. Am Vakuumtisch wird ein Unterdruck angelegt, wodurch die beschichtete Polymerfolie gespannt wird und so eine Faltenbildung während der Bearbeitung verhindert wird. Im Folienbereich über den Glasplatten liegt dabei kein Unterdruck an, da die Vakuumdüsen von den Glasplatten abgedeckt werden. Da jedoch im umgebenden Bereich ein Unterdruck angelegt wird, ist die beschichtete Polymerfolie auch im Bereich der Glasplatten gespannt und faltenfrei. Im Folienbereich über den Glasplatten wird mittels Lasern ein entschichteter Bereich auf der Oberfläche der beschichteten Polymerfolie erzeugt. Der Unterdruck wird daraufhin entfernt und über die Transportrollen wird ein neuer Abschnitt der beschichteten Polymerfolie eingelegt. Die beim Lasern abgetragenen Partikel werden über eine Partikelabsaugung entfernt.

Die Laserbearbeitung der beschichteten Polymerfolie findet in einer Kammer mit Schutzgasatmosphäre statt. Die Schutzgasatmosphäre verhindert eine Korrosion der Beschichtung an den Rändern des entschichteten Bereichs. Durch den Laser wird in hohem Maße Energie eingetragen, wodurch die Beschichtung sich im bearbeiteten Bereich erwärmt. Am Rand des entschichteten Bereichs würde das Metall der Beschichtung durch diese Erwärmung bei Kontakt mit Sauerstoff oxidiert werden. Aus diesem Grund ist das Lasern unter Ausschluss von Sauerstoff durchzuführen. Die Schutzgasatmosphäre enthält bevorzugt Stickstoff, Argon und/oder Gemische davon.

Das Lasern erfolgt mittels mindestens eines 2D-Laserscanners oder 3D-Laserscanners. Diese Laserscanner sind senkrecht zur Oberfläche der beschichteten Polymerfolie angeordnet. 2D-Laserscanner verfügen über einen maximalen Arbeitsbereich von 500 mm Breite und 500 mm Länge. Somit müssen bei großen Scheiben oder mehreren Sensorfenstern in verschiedenen Bereichen der Scheibe mehrere 2D-Laserscanner eingesetzt werden um den kompletten zu bearbeitenden Bereich abzudecken. Alternativ kann auch ein 2D-Laserscanner auf einer Achse montiert werden, so dass dieser im gesamten Arbeitsbereich entsprechend beweglich ist. Ein 3D-Laserscanner deckt einen Bereich von 1 m Breite und 1 m Länge ab, wodurch gewöhnlich ein einzelner 3D-Laserscanner für den kompletten Arbeitsbereich ausreicht. Aus Kostengründen werden jedoch bevorzugt ein oder mehrere 2D-Laserscanner eingesetzt.

Als Laserquelle werden bevorzugt gepulste Festkörperlaser eingesetzt. Besonders bevorzugt wird ein Neodym-dotierter Yttrium-Aluminium-Granat-Laser (Nd:YAG-Laser) verwendet. Alternativ können auch Ytterbium (Yb:YAG-Laser) oder Erbium (Er:YAG-Laser) als Dotierungsmaterialien verwendet werden oder Titan: Saphir-Laser oder Neodym-dotierte Yttrium-Vanadat-Laser (Nd:YVO₄-Laser) eingesetzt werden. Der Nd:YAG-Laser emittiert infrarote Strahlung einer Wellenlänge von 1064 nm. Durch Frequenzverdopplung bzw. Frequenzverdreifachung kann jedoch auch Strahlung der Wellenlängen 532 nm und 355 nm erzeugt werden.

Bei Verwendung eines 2D-Laserscanners trifft der von der Laserquelle erzeugte Laserstrahl auf einen Strahlaufweiter und wird von dort über einen Spiegel zum 2D-Laserscanner umgelenkt. Bei 3D-Laserscannern wird der Laserstrahl von der Laserquelle direkt über einen Spiegel zum 3D-Laserscanner gelenkt.

Das Lasern erfolgt mit einer Wellenlänge von 300 nm bis 1300 nm. Die eingesetzte Wellenlänge hängt dabei von der Art der Beschichtung ab. Der bevorzugt verwendete Nd:YAG-Laser kann Laserstrahlung der Wellenlängen 355 nm, 532 nm und 1064 nm bereitstellen. Für die Bearbeitung von Silberbeschichtungen wird bevorzugt eine Wellenlänge von 532 nm eingesetzt.

Das Lasern erfolgt bevorzugt mit einer Leistung von 1 W bis 150 W, besonders bevorzugt mit einer Leistung von 10 W bis 50 W.

Die erste Laminierfolie und die zweite Laminierfolie umfassen Polyvinylbutyral, Ethylenvinylacetat, Polyurethan und/oder Gemische und/oder Copolymere davon. Bevorzugt wird Polyvinylbutyral verwendet.

Die erste Laminierfolie und die zweite Laminierfolie weisen eine Dicke auf von 0,1 mm bis 0,8 mm, bevorzugt von 0,3 mm bis 0,5 mm.
Die Polymerfolie enthält Polyethylenterephthalat, Polyethylen, Polypropylen, Polycarbonat, Polybutylenterephthalat, Polyethylennaphthalat und/oder Gemische und/oder Copolymere davon. Bevorzugt wird Polyethylenterephthalat eingesetzt.

Die Polymerfolie weist eine Dicke auf von 20 µm bis 120 µm, bevorzugt von 40 µm bis 60 µm.

Die Beschichtung der beschichteten Polymerfolie ist bevorzugt metallhaltig und umfasst besonders bevorzugt Silber, Gold, Kupfer, Indium, Zinn, Zink, Rhodium, Platin, Palladium und/oder Gemische und/oder Legierungen davon. Für eine Anwendung als Sonnenschutzbeschichtung wird bevorzugt Silber eingesetzt.

Die Beschichtung weist eine Dicke auf von 1nm bis 500 nm, bevorzugt von 50 nm bis 250 nm.

Im entschichteten Bereich der beschichteten Polymerfolie werden mindestens 80 Gewichtsprozent, bevorzugt mindestens 90 Gewichtsprozent der Beschichtung entfernt.

Die Strahlung der Laser wird so auf die Beschichtung der beschichteten Polymerfolie fokussiert, dass die Beschichtung möglichst vollständig entfernt wird. Bei einer exakten Fokussierung der Laserstrahlung liegt die zu entfernende Beschichtung, möglicherweise die Polymerfolie und allenfalls ein Teil der Glasplatten innerhalb dieses Fokus. Die Glasplatten werden jedoch nicht durch die Laserstrahlung beschädigt. Im Gegensatz zu einem Vakuumtisch ohne Glasplatten, wie nach dem Stand der Technik bekannt, erfolgt durch die erfindungsgemäße Verwendung der Glasplatten somit keine Beschädigung des Vakuumtisches. Bei einer fehlerhaften Fokussierung der Laserstrahlung könnte auch die obere Platte des Vakuumtisches durch Laserstrahlung beschädigt werden, die durch die entschichtete Polymerfolie und die Glasplatten hindurch auf die obere Platte trifft. Selbst bei einer solchen unerwünschten Beschädigung der oberen Platte werden die dabei entstehenden Metallpartikel jedoch von den Glasplatten zurückgehalten und eine Beschädigung der Polymerfolie durch Metallpartikeln wird erfindungsgemäß vermieden.

Der entschichtete Bereich weist eine Größe auf von 2 cm² bis 200 cm², bevorzugt von 20 cm² bis 120 cm².

Der entschichtete Bereich hat bevorzugt einen maximalen Anteil von 15 %, besonders bevorzugt einen maximalen Anteil von 5 %, an der Gesamtfläche der Scheibe.

Im entschichteten Bereich beträgt die mittlere Transmission für elektromagnetische Strahlung im Wellenlängenbereich von 300 nm bis 1300 nm mindestens 75 %, bevorzugt mindestens 85 %.

Die Erfindung umfasst des Weiteren eine Vorrichtung zum Lasern einer flexiblen beschichteten Polymerfolie, die einen Vakuumtisch, mindestens eine auf dem Vakuumtisch befestigte Glasplatte, mindestens einen 2D-Laserscanner oder einen 3D-Laserscanner, eine Kammer mit Schutzgas und zwei Transportrollen beinhaltet. Der Vakuumtisch umfasst einen Schwenkarm auf dem eine untere Platte montiert ist und eine obere Platte, die auf der unteren Platte befestigt ist. Auf dem Vakuumtisch befinden sich eine oder mehrere Glasplatten, die in Ausfräsungen auf der oberen Platte des Vakuumtisches eingeklebt sind. Die Laserscanner sind senkrecht zur Oberfläche des Vakuumtisches ausgerichtet. Der Arbeitsbereich des 3D-Laserscanners oder der 2D-Laserscanner decken mindestens den Bereich der Glasplatten ab. Der Vakuumtisch und die Laseranordnung sind von der Kammer mit Schutzgas umgeben. Außerhalb der Kammer befinden sich zwei Transportrollen, die die beschichtete Polymerfolie durch die Kammer hindurch über den Vakuumtisch hinweg transportieren. Besondere Ausführungen des erfindungsgemäßen Verfahrens umfassen die Bearbeitung eines Bilayers aus einer ersten Laminierfolie und einer beschichteten Polymerfolie. Dabei wird der Bilayer in Rollenform vorgelegt und so von den Transportrollen abgerollt, dass die Beschichtung der beschichteten Polymerfolie in Richtung der Laserscanner zeigt. Andere Ausführungen des erfindungsgemäßen Verfahrens umfassen die Bearbeitung von starren Substraten wie beschichteten Glassubstraten. Starre Substrate können dabei nicht von der Rolle verarbeitet werden, sondern werden manuell eingelegt.

Im Folgenden wird die Erfindung anhand von Zeichnungen näher erläutert. Es zeigen:
Figur 1 und Figur 1A eine schematische Ansicht der erfindungsgemäßen Vorrichtung zur Bearbeitung einer beschichteten Polymerfolie mittels eines 2D-Laserscanners.
Figur 2 eine schematische Ansicht der erfindungsgemäßen Vorrichtung zur Bearbeitung einer beschichteten Polymerfolie mittels eines 3D-Laserscanners.
Figur 3 eine schematische Draufsicht des Vakuumtisches belegt mit Glasplatten und überspannt mit einer Polymerfolie.
Figur 4 eine schematische Ansicht der Zusammensetzung des mit Glasplatten belegten Vakuumtisches.
Figur 5 eine schematische Ansicht einer nach dem erfindungsgemäßen Verfahren hergestellten Verbundglasscheibe.
Figur 6 eine schematische Ansicht einer Windschutzscheibe mit Sensorfenstern.
Figur 7 ein Fließschema des erfindungsgemäßen Verfahrens zur Herstellung einer Verbundglasscheibe mit Sensorfenster.

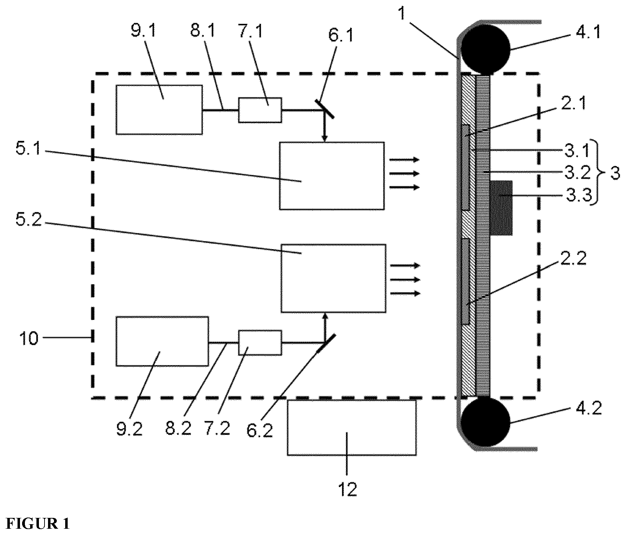

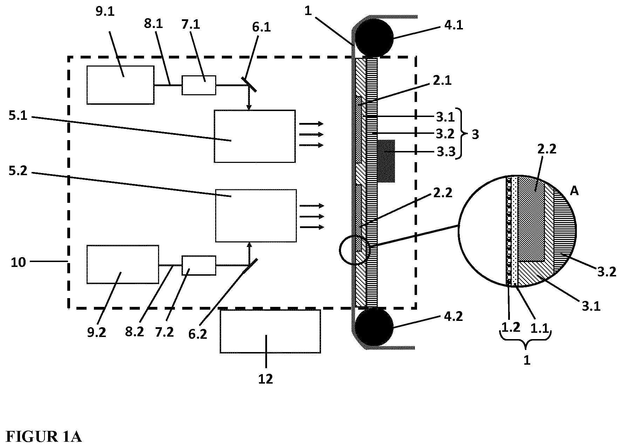

Figur 1 zeigt eine schematische Ansicht der erfindungsgemäßen Vorrichtung zur Bearbeitung einer beschichteten Polymerfolie (1) mittels 2D-Laserscannern (5.1, 5.2). Die beschichtete Polymerfolie (1) wird von einer unteren Transportrolle (4.2) abgerollt und auf einer oberen Transportrolle (4.1) wieder aufgerollt. Zwischen den beiden Transportrollen (4) wird die beschichtete Polymerfolie (1) abschnittsweise über einen Vakuumtisch (3) gespannt. Der Vakuumtisch (3) umfasst einen Schwenkarm (3.3) auf dem eine untere Platte (3.2) montiert ist. Auf der unteren Platte (3.2) ist eine obere Platte (3.1) befestigt. In die obere Platte (3.1) sind eine erste Glasplatte (2.1) und eine zweite Glasplatte (2.2) bündig eingelassen. Der Vakuumtisch (3) ist senkrecht angeordnet um einen platzsparenden Aufbau der Anlage zu ermöglichen. Die 2D-Laserscanner (5.1, 5.2) zeigen in Richtung der Oberfläche der beschichteten Polymerfolie (1). Beide 2D-Laserscanner (5.1, 5.2) verfügen über eine eigene Laserquelle (9.1, 9.2). Der von einer ersten Laserquelle (9.1) emittierte Laserstrahl (8.1) trifft zunächst auf einen ersten Strahlaufweiter (7.1) und wird dann über einen ersten Umlenkspiegel (6.1) zum ersten 2D-Laserscanner (5.1) geleitet. Die Anordnung aus zweiter Laserquelle (9.2), zweitem Strahlaufweiter (7.2) und zweitem Umlenkspiegel (6.2) ist parallel zum ersten Strahlengang angebracht. Der zweite Laserstrahl (8.2) wird ausgehend von der zweiten Laserquelle (9.2) zum zweiten Strahlaufweiter (7.2) und von dort über einen zweiten Umlenkspiegel (6.2) zum zweiten Laserscanner (5.2) geleitet. Der Arbeitsbereich der 2D-Laserscanner (5.1, 5.2) deckt mindestens den Folienbereich über den Glasplatten (2.1, 2.2) ab. Der Vakuumtisch (3) mit Glasplatten (2.1, 2.2) und beschichteter Polymerfolie (1) sowie die Laseranordnung (9, 8, 7, 6, 5) befinden sich in einer Kammer (10). Die Kammer (10) ist mit Schutzgas gefüllt um eine Oxidation der Oberfläche bei der Bearbeitung zu verhindern. Die Transportrollen (4) befinden sich außerhalb der Kammer (10). Am Boden der Kammer (10) ist eine Partikelabsaugung (12) angebracht über die die bei der Bearbeitung entstehenden Partikel entfernt werden.

Figur 1A zeigt eine schematische Ansicht der erfindungsgemäßen Vorrichtung gemäß Figur 1, wobei ein Ausschnitt A vergrößert dargestellt ist. Auf die untere Platte (3.2) des Vakuumtisches (3) ist eine obere Platte (3.3) montiert in die eine erste Glasplatte (2.1) und eine zweite Glasplatte (2.2) eingelassen sind. Über den Vakuumtisch (3) wird mit Hilfe zweier Transportrollen (4) eine beschichtete Polymerfolie (1) gespannt. Die Transportrollen (4) sind dazu seitlich des Vakuumtisches (3) angebracht, wobei die untere Transportrolle (4.2) sich unterhalb und die obere Transportrolle (4.3) sich oberhalb des senkrecht angeordneten Vakuumtisches (3) befindet. Die im erfindungsgemäßen Verfahren zu bearbeitende Beschichtung (1.2) der beschichteten Polymerfolie (1) zeigt dabei in Richtung der 2D-Laserscanner (5.1, 5.2), während die der Beschichtung (1.2) gegenüberliegende Seite der Polymerfolie (1.1) nach Anlegen eines Unterdrucks direkt auf dem Vakuumtisch (3) aufliegt.

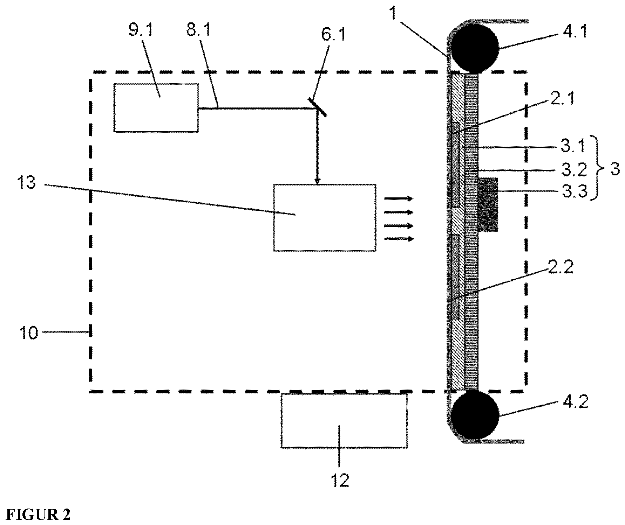

Figur 2 zeigt eine schematische Ansicht der erfindungsgemäßen Vorrichtung zur Bearbeitung einer beschichteten Polymerfolie (1) mittels eines 3D-Laserscanners (13). Die beschichtete Polymerfolie (1) wird von einer unteren Transportrolle (4.2) abgerollt und auf einer oberen Transportrolle (4.1) wieder aufgerollt. Zwischen den beiden Transportrollen (4) wird die beschichtete Polymerfolie (1) abschnittsweise über einen Vakuumtisch (3) gespannt. Der Vakuumtisch (3) umfasst einen Schwenkarm (3.3) auf dem eine untere Platte (3.2) montiert ist. Auf der unteren Platte (3.2) ist eine obere Platte (3.1) befestigt. In die obere Platte (3.1) sind eine erste Glasplatte (2.1) und eine zweite Glasplatte (2.2) bündig eingelassen. Der Vakuumtisch (3) ist senkrecht angeordnet um einen platzsparenden Aufbau der Anlage zu ermöglichen. Der 3D-Laserscanner (13) zeigt in Richtung der beiden Glasplatten (2.1, 2.2). Der Arbeitsbereich des 3D-Laserscanners (13) deckt mindestens den Folienbereich über den beiden Glasplatten (2.1, 2.2) ab. Eine erste Laserquelle (9.1) emittiert einen ersten Laserstrahl (8.1), der über einen ersten Umlenkspiegel (6.1) zum 3D-Laserscanner (13) geleitet wird. Der Vakuumtisch (3) mit Glasplatten (2.1, 2.2) und beschichteter Polymerfolie (1) sowie die Laseranordnung (9, 8, 7, 6, 5) befinden sich in einer Kammer (10). Die Kammer (10) ist mit Schutzgas gefüllt um eine Oxidation der Oberfläche bei der Bearbeitung zu verhindern. Die Transportrollen (4) befinden sich außerhalb der Kammer (10). Am Boden der Kammer (10) ist eine Partikelabsaugung (12) angebracht über die die bei der Bearbeitung entstehenden Partikel entfernt werden.

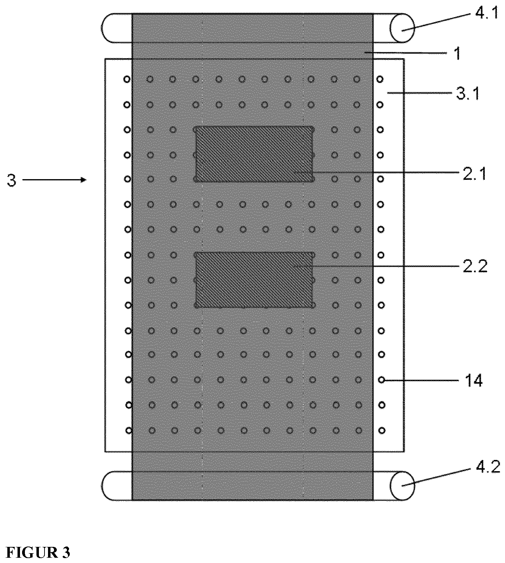

Figur 3 zeigt eine schematische Draufsicht des Vakuumtisches (3) belegt mit Glasplatten (2.1, 2.2) und überspannt mit einer beschichteten Polymerfolie (1). Die beschichtete Polymerfolie (1) wird von einer unteren Transportrolle (4.2) abgerollt und auf einer oberen Transportrolle (4.1) aufgerollt. Zwischen den beiden Transportrollen (4.1, 4.2) befindet sich der Vakuumtisch (3) über dessen oberer Platte (3.1) die beschichtete Polymerfolie (1) aufgespannt ist. Die obere Platte (3.1) des Vakuumtisches (3) weist in regelmäßigem Abstand Löcher auf, die als Vakuumdüsen (14) dienen. In die Oberfläche der oberen Platte (3.1) sind bündig eine erste Glasplatte (2.1) und eine zweite Glasplatte (2.2) eingelassen.

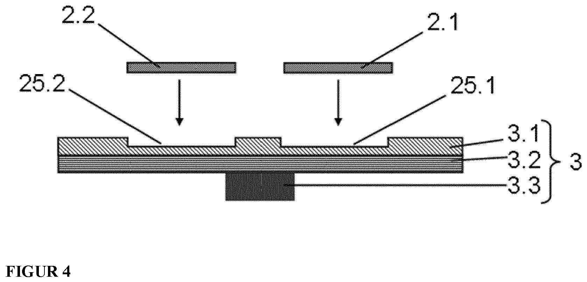

Figur 4 zeigt eine schematische Ansicht der Zusammensetzung des mit Glasplatten (2.1, 2.2) belegten Vakuumtisches (3). Der Vakuumtisch (3) umfasst einen Schwenkarm (3.3) auf dem eine untere Platte (3.2) montiert ist. Auf der unteren Platte (3.2) ist eine obere Platte (3.1) befestigt. In der oberen Platte (3.1) sind eine erste Ausfräsung (25.1) und eine zweite Ausfräsung (25.2) angebracht, die in ihrer Form und Größe der ersten Glasplatte (2.1) und der zweiten Glasplatte (2.2) entsprechen. Die erste Glasplatte (2.1) wird bündig in die erste Ausfräsung (25.1) und die zweite Glasplatte (2.2) bündig in die zweite Ausfräsung (25.2) eingelegt. Beide Glasplatten (2.1, 2.2) werden in den Ausfräsungen (25) bevorzugt über einen Klebstoff fixiert.

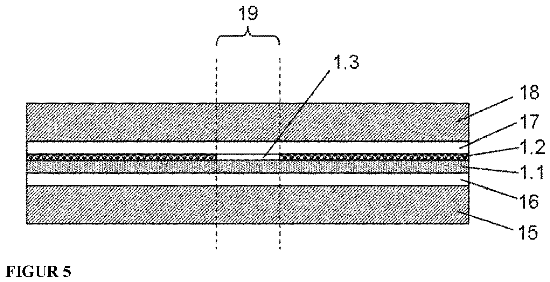

Figur 5 zeigt eine schematische Ansicht einer nach dem erfindungsgemäßen Verfahren hergestellten Verbundglasscheibe. Die Verbundglasscheibe umfasst eine Grundscheibe (15), auf der Grundscheibe (15) eine erste Laminierfolie (16), auf der ersten Laminierfolie (16) eine beschichtete Polymerfolie (1), auf der beschichteten Polymerfolie (1) eine zweite Laminierfolie (17) und auf der zweiten Laminierfolie (17) eine Deckscheibe (18). Die beschichtete Polymerfolie (1) umfasst eine Polymerfolie (1.1) und eine Beschichtung (1.2), wobei ein Abschnitt der Beschichtung (1.2) entfernt ist und einen entschichteten Bereich (1.3) bildet. In dem Bereich der Verbundglasscheibe, der den entschichteten Bereich (1.3) der beschichteten Polymerfolie (1) enthält, entsteht ein Sensorfenster (19).

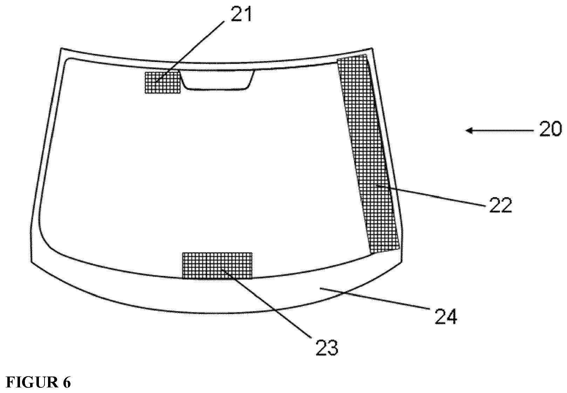

Figur 6 zeigt eine schematische Ansicht einer Windschutzscheibe mit Sensorfenstern (20). Am oberen Rand der Windschutzscheibe werden Sensorfenster für Funkmaut (21) benötigt, während die Sensorfenster für Antennen (22) am seitlichen und die Sensorfenster für Radarwarner (23) am unteren Rand der Scheibe angebracht sind. Der Scheibenrand mit Schwarzdruck (24) ist nach Einbau der Windschutzscheibe ins Fahrzeug größtenteils nicht mehr sichtbar.

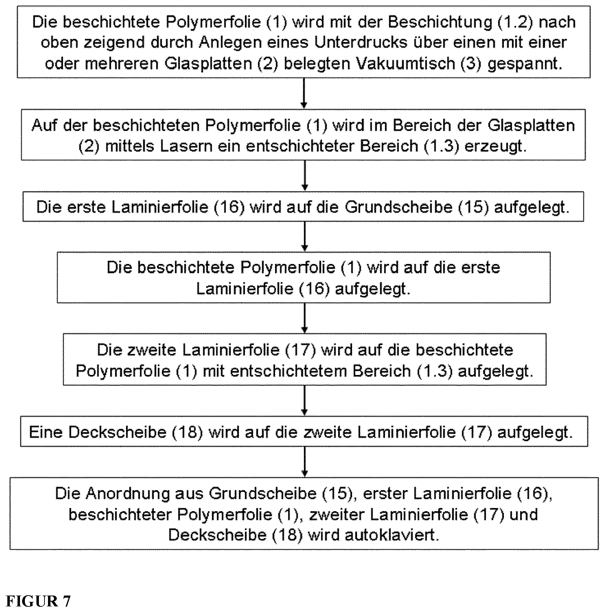

Figur 7 zeigt ein Fließschema des erfindungsgemäßen Verfahrens zur Herstellung einer Verbundglasscheibe mit Sensorfenster. Die beschichtete Polymerfolie (1) wird in einem ersten Schritt mit der Beschichtung (1.2) nach oben zeigend durch Anlegen eines Unterdrucks über einen mit einer oder mehreren Glasplatten (2.1, 2.2) belegten Vakuumtisch (3) gespannt. Daraufhin wird im Bereich der Glasplatten (2.1, 2.2) auf der beschichteten Polymerfolie (1) ein entschichteter Bereich (1.3) erzeugt. Diese beschichtete Polymerfolie (1) mit entschichtetem Bereich (1.3) wird im Folienverbund einer Windschutzscheibe eingesetzt. Dazu wird auf die Grundscheibe (15) die erste Laminierfolie (16) und auf die erste Laminierfolie (16) die beschichtete Polymerfolie (1) mit entschichtetem Bereich (1.3) aufgelegt. Auf die beschichtete Polymerfolie (1) mit entschichtetem Bereich (1.3) wird die zweite Laminierfolie (17) aufgelegt und der Folienstapel wird mit einer Deckscheibe (18) abgeschlossen. Anschließend wird die Scheibenanordnung autoklaviert und so eine Verbundglasscheibe hergestellt.

Im Folgenden wird die Erfindung anhand eines Beispiels des erfindungsgemäßen Verfahrens und eines Vergleichsbeispiels näher erläutert.

In zwei Versuchsreihen wurde die Wirtschaftlichkeit der Herstellung einer Verbundglasscheibe mit Sensorfenster nach dem Stand der Technik und nach dem erfindungsgemäßen Verfahren verglichen. Die Fläche der hergestellten Verbundglasscheibe betrug in beiden Versuchsreihen 1,2 m². Bei beiden Verbundglasscheiben wurden je zwei Sensorfenster mit einer Fläche von insgesamt 100 cm² erstellt. In beiden Versuchsreihen wurden die gleichen Glasscheiben aus Floatglas mit einer Dicke von 2,1 mm verwendet. Eine Grundscheibe (15) und eine Deckscheibe (18) wurden gemeinsam im Schwerkraftbiegeverfahren vorgebogen. Als erste Laminierfolie (16) und als zweite Laminierfolie (17) wurde eine PVB-Folie mit einer Dicke von 0,38 mm (Solutia/Safllex (RK11)) verwendet. Als Polymerfolie (1.1) wurde eine 50 µm dicke PET-Folie der Firma Southwall (XIR 75-G2) mit einer Silberbeschichtung eingesetzt. Es wurde ein entschichteter Bereich (1.3) erzeugt, indem die Beschichtung (1.2) der beschichteten Polymerfolie (1) mit zwei 2D-Laserscannern (5.1, 5.2) bei einer Wellenlänge von 532 nm und einer Leistung von 20 W entfernt wurde. Als Laserquellen (9.1, 9.2) wurden Nd:YAG-Laser verwendet. Die nach Beispiel 1 oder Vergleichsbeispiel 2 bearbeiteten beschichteten Polymerfolien (1) mit entschichtetem Bereich (1.3) wurden in den Folienverbund einer Verbundglasscheibe eingesetzt. Auf eine Grundscheibe (15) wurde eine erste Laminierfolie (16) aufgelegt. Auf der ersten Laminierfolie wurde die nach Beispiel 1 oder Vergleichsbeispiel 2 bearbeitete Polymerfolie (1) angeordnet. Auf die beschichtete Polymerfolie (1) wurde eine zweite Laminierfolie (17) aufgelegt und der Folienstapel mit einer Deckscheibe (18) abgeschlossen. Diese Anordnung wurde in einem Kunststoffsack (COEX, BUERGOFOL GmbH, D-93354 Siegenburg) bei einem Druck von 1 mbar, bei Raumtemperatur 5 Minuten lang vorevakuiert. Die auf diese Weise hergestellte Vorverbundscheibe wurde abschließend 2,5 Stunden lang bei 80 °C bis 120 °C und 8 bar bis 13 bar im Autoklaven laminiert.

### a) Beispiel 1: Herstellung einer Verbundglasscheibe mit Sensorfenster nach dem erfindungsgemäßen Verfahren

Eine beschichtete Polymerfolie (1) wurde in Rollenform vorgelegt und von einer unteren Transportrolle (4.2) abgerollt und einer oberen Transportrolle (4.1) aufgerollt. Zwischen den beiden Transportrollen (4) wurde ein Vakuumtisch (3) angeordnet. Der Vakuumtisch (3) umfasste einen Schwenkarm (3.3), auf dem Schwenkarm (3.3) eine untere Platte (3.2) und auf der unteren Platte (3.2) eine obere Platte (3.1). Das Material der oberen Platte (3.1) war Aluminium. Die obere Platte (3.1) wies zwei Ausfräsungen (25.1, 25.2) auf, in die zwei Glasplatten (2.1, 2.2) mit einer Dicke von 2,1 mm bündig eingeklebt wurden. Die Positionen der Glasplatten (2.1, 2.2) entsprachen den Positionen der späteren Sensorfenster (19). Die Laseranordnung (9, 8, 7, 6, 5), der Vakuumtisch (3) mit Glasplatten (2.1, 2.2) und die beschichtete Polymerfolie (1) befanden sich innerhalb einer Kammer (10) mit Schutzgas, an die eine Partikelabsaugung (12) angeschlossen wurde. Die beschichtete Polymerfolie (1) wurde über die Transportrollen (4) abschnittsweise abgerollt, wobei die Beschichtung (1.2) der beschichteten Polymerfolie (1) nach oben in Richtung der 2D-Laserscanner (5) orientiert war. Die Transportrollen (4) wurden angehalten und es wurde ein Unterdruck am Vakuumtisch (3) angelegt. Die Luft zwischen Vakuumtisch (3) und beschichteter Polymerfolie (1) wurde dabei über Vakuumdüsen (14) in der oberen Platte (3.1) entfernt und die beschichtete Polymerfolie (1) wurde gespannt. Die Beschichtung (1.2) der beschichteten Polymerfolie (1) wurde daraufhin im Bereich der Glasplatten (2.1, 2.2) mit zwei 2D-Laserscannern (5.1, 5.2) abgetragen. Die obere Platte (3.1) des Vakuumtisches (3) war dabei durch die Glasplatten (2.1, 2.2) geschützt, wodurch die Oberfläche des Vakuumtisches (3) nicht beschädigt wurde. Dadurch wurde die Abtragung von Metallpartikeln verhindert. Eine Reinigung des Vakuumtisches (3) war somit nicht notwendig. Der Unterdruck wurde entfernt und über die Transportrollen (4) wurde ein neuer Folienabschnitt eingelegt.

### b) Vergleichsbeispiel 2: Herstellung einer Verbundglasscheibe mit Sensorfenster nach dem Stand der Technik

In Vergleichsbeispiel 2 wurde eine Verbundglasscheibe mit Sensorfenster hergestellt wie in Beispiel 1 mit dem Unterschied, dass in die obere Platte (3.1) des Vakuumtisches (3) keine Glasplatten (2) eingelassen waren. Dadurch wurde die obere Platte (3.1) des Vakuumtisches (3) beim Lasern der beschichteten Polymerfolie (1) beschädigt, was zur Abtragung von Metallpartikeln an der Tischoberfläche führte. Diese Metallpartikel hafteten an der beschichteten Polymerfolie (1) und führten zu deren Beschädigung. Um die Schäden an der Beschichtung (1.2) der beschichteten Polymerfolie (1) möglichst gering zu halten war nach 100 bearbeiteten Folienabschnitten eine manuelle Reinigung des Vakuumtisches notwendig.

Tabelle 1 zeigt die Reinigungszyklen der oberen Platte (3.1) des Vakuumtisches (3) nach dem erfindungsgemäßen Verfahren (Beispiel 1) und dem Stand der Technik (Vergleichsbeispiel 2) und den sich daraus ergebenden Anstieg der produzierten Stückzahlen.

**Tabelle 1**

| | Reinigungszyklus | Stückzahlen |
|---|---|---|
| Beispiel 1 | keine Reinigung | ∼150% |
| Vergleichsbeispiel 2 | alle 100 Scheiben | ≙ 100% |

Nach dem Stand der Technik muss die obere Platte (3.1) des Vakuumtisches (3) jeweils nach der Bearbeitung von 100 Folienabschnitten von Metallpartikeln gereinigt werden, die durch eine Beschädigung der oberen Platte (3.1) beim Lasern entstehen. Diese Beschädigung der oberen Platte (3.1) kann beim erfindungsgemäßen Verfahren vollständig vermieden werden.

Dadurch ist nach dem erfindungsgemäßen Verfahren eine Reinigung des Vakuumtisches (3) und ein damit einhergehender Stillstand der Produktion überflüssig. Somit kann nach dem erfindungsgemäßen Verfahren nicht nur Personal zur Reinigung des Vakuumtisches (3) eingespart werden, sondern auch die Produktivität der Anlage erhöht werden. Die Stückzahl der in Vergleichsbeispiel 2 nach dem Stand der Technik produzierten Scheiben pro Zeiteinheit wurde auf 100 % normiert. Beim erfindungsgemäßen Verfahren ist mit einer Produktionssteigerung von mindestens 50 % zu rechnen. Das erfindungs gemäße Verfahren weist demnach enorme wirtschaftliche Vorteile auf, da die Produktivität der Anlage erhöht wird und gleichzeitig die Kosten durch Personaleinsparung gesenkt werden können.

### Bezugszeichenliste

- 1: beschichtete Polymerfolie
- 1.1: Polymerfolie
- 1.2: Beschichtung
- 1.3: entschichteter Bereich
- 2: Glasplatten
- 2.1: erste Glasplatte
- 2.2: zweite Glasplatte
- 3: Vakuumtisch
- 3.1: obere Platte
- 3.2: untere Platte
- 3.3: Schwenkarm
- 4: Transportrollen
- 4.1: obere Transportrolle
- 4.2: untere Transportrolle
- 5: 2D-Laserscanner
- 5.1: erster 2D-Laserscanner
- 5.2: zweiter 2D-Laserscanner
- 6: Umlenkspiegel
- 6.1: erster Umlenkspiegel
- 6.2: zweiter Umlenkspiegel
- 7: Strahlaufweiter
- 7.1: erster Strahlaufweiter
- 7.2: zweiter Strahlaufweiter
- 8: Laserstrahl
- 8.1: erster Laserstrahl
- 8.2: zweiter Laserstrahl
- 9: Laserquelle
- 9.1: erste Laserquelle
- 9.2: zweite Laserquelle
- 10: Kammer
- 12: Partikelabsaugung
- 13: 3D-Laserscanner
- 14: Vakuumdüsen
- 15: Grundscheibe
- 16: erste Laminierfolie
- 17: zweite Laminierfolie
- 18: Deckscheibe
- 19: Sensorfenster
- 20: Windschutzscheibe mit Sensorfenstern
- 21: Sensorfenster für Funkmaut
- 22: Sensorfenster für Antennen
- 23: Sensorfenster für Radarwarner
- 24: Scheibenrand mit Schwarzdruck
- 25: Ausfräsungen
- 25.1: erste Ausfräsung
- 25.2: zweite Ausfräsung

- A: Ausschnitt

## Patentansprüche

1. Verfahren zur Herstellung einer Verbundglasscheibe aus einer Grundscheibe (15), einer ersten Laminierfolie (16), einer beschichteten Polymerfolie (1) mit Beschichtung (1.2), einer zweiten Laminierfolie (17), und einer Deckscheibe (18) mit mindestens einem Sensorfenster (19) umfassend die Schritte a) bis d), wobei
a) die beschichtete Polymerfolie (1) über einen mit einer oder mehreren Glasplatten belegten Vakuumtisch (3) gespannt wird, wobei die Beschichtung (1.2) vom Vakuumtisch weg zeigt,
b) auf der beschichteten Polymerfolie (1) mittels Lasern mindestens ein entschichteter Bereich (1.3) erzeugt wird, wobei die Polymerfolie (1) mittels mindestens eines 2D-Laserscanners (5.1, 5.2) oder 3D-Laserscanners (13), die senkrecht zur beschichteten Polymerfolie (1) angeordnet sind, entschichtet wird, wobei die Beschichtung (1.2) der Polymerfolie (1) in Richtung des Laserscanners (5.1, 5.2 13) zeigt,
c) auf die Grundscheibe (15) die erste Laminierfolie (16), auf die erste Laminierfolie (16) die beschichtete Polymerfolie (1), auf die beschichtete Polymerfolie (1) die zweite Laminierfolie (17) und auf die zweite Laminierfolie (17) die Deckscheibe (18) angeordnet wird, und
d) die Anordnung autoklaviert wird,
wobei der entschichtete Bereich (1.3) über den Glasplatten (2.1, 2.2) erzeugt wird, mit denen der Vakuumtisch (3) belegt ist.

2. Verfahren nach Anspruch 1, wobei der Vakuumtisch (3) mit einem Schwenkarm (3.3), mit einer auf dem Schwenkarm (3.3) montierten ersten Platte (3.2) und mit einer auf der ersten Platte (3.2) angebrachten zweiten Platte (3.1) betrieben wird.

3. Verfahren nach Anspruch 1 oder 2, wobei der Vakuumtisch (3) senkrecht angeordnet wird.

4. Verfahren nach Anspruch 2, wobei der Vakuumtisch (3) mit in Ausfräsungen (25.1, 25.2) der zweiten Platte (3.1) eingelegten Glasplatten (2.1, 2.2) betrieben wird.

5. Verfahren nach einem der Ansprüche 1 bis 4, wobei die Glasplatten (2.1, 2.2) mit einem Klebstoff aus der Gruppe Epoxidharze, Polyurethanklebstoff, Silikone, Cyanacrylat-Klebstoffe und/oder Gemischen davon, besonders bevorzugt Epoxidharze, befestigt werden.

6. Verfahren nach einem der Ansprüche 1 bis 5, das kontinuierlich durch Abrollen der beschichteten Polymerfolie (1) von den Transportrollen (4.1, 4.2) verläuft, wobei
m) die beschichtete Polymerfolie (1) über zwei Transportrollen (4.1, 4.2) über die Länge des Vakuumtisches (3) abgerollt wird, wobei die Transportrollen (4.1, 4.2) benachbart zum Vakuumtisch (3) angeordnet sind, wobei der Vakuumtisch (3) so zwischen den Transportrollen (4.1, 4.2) liegt, dass die beschichtete Polymerfolie (1) parallel zur Oberfläche des Vakuumtisches (3) über die Transportrollen (4.1, 4.2) auf- und abgerollt werden kann,
n) die Transportrollen (4.1, 4.2) angehalten werden,
o) über die Vakuumdüsen (14) des Vakuumtisches (3) ein Unterdruck zwischen Vakuumtisch (3) und beschichteter Polymerfolie (1) angelegt und die beschichtete Polymerfolie (1) gespannt wird,
p) auf der beschichteten Polymerfolie (1) im Bereich der Glasplatten (2.1, 2.2) mittels Lasern mindestens ein entschichteter Bereich (1.3) erzeugt wird,
q) der Vakuumtisch (3) belüftet wird und
wobei die durch den Laservorgang entstandenen Partikel über eine Partikelabsaugung (12) entfernt werden.

7. Verfahren nach einem der Ansprüche 1 bis 6, wobei das Lasern in einer Kammer (10) mit Schutzgasatmosphäre, enthaltend Stickstoff und/oder Argon und/oder Gemische davon, durchgeführt wird.

8. Verfahren nach Anspruch 1, wobei die beschichtete Polymerfolie (1) mit einer Wellenlänge von 300 nm bis 1300 nm entschichtet wird.

9. Verfahren nach einem der Ansprüche 1 bis 8, wobei die beschichtete Polymerfolie (1) mit Polyethylenterephthalat, Polyethylen, Polypropylen, Polycarbonat, Polybutylenterephthalat, Polyethylennaphthalat und/oder Gemischen und/oder Copolymeren davon eingesetzt wird und die Beschichtung (1.2), bevorzugt eine Metallbeschichtung umfassend Silber, Gold, Kupfer, Indium, Zinn, Zink, Rhodium, Platin, Palladium und/oder Gemische und/oder Legierungen davon ist.

10. Verfahren nach einem der Ansprüche 1 bis 9, wobei im entschichteten Bereich (1.3) mindestens 80 Gewichtsprozent, bevorzugt mindestens 90 Gewichtsprozent der Beschichtung (1.2) entfernt werden.

11. Verfahren nach einem der Ansprüche 1 bis 10, wobei der entschichtete Bereich (1.3) im Wellenlängenbereich von 300 nm bis 1300 nm eine mittlere Transmission für elektromagnetische Strahlung von mindestens 75 %, bevorzugt mindestens 85 % aufweist.

12. Vorrichtung zum Lasern einer beschichteten Polymerfolie (1) umfassend
r) einen Vakuumtisch (3) enthaltend einen Schwenkarm (3.3), eine erste Platte (3.2) befestigt auf dem Schwenkarm (3.3), eine zweite Platte (3.1) befestigt auf der ersten Platte (3.2),
s) mindestens eine Glasplatte (2.1, 2.2) eingelegt in der zweiten Platte (3.1) des Vakuumtisches (3) und
t) einen 3D-Laserscanner (13) oder mindestens einen 2D-Laserscanner (5.1, 5.2), der senkrecht zur Oberfläche des Vakuumtisches (3) ausgerichtet ist und dessen Arbeitsbereich mindestens den Bereich der Glasplatten (2.1, 2.2) abdeckt.

13. Vorrichtung nach Anspruch 12, die in einer Kammer (10) mit Schutzgasatmosphäre angeordnet ist.

14. Vorrichtung nach Anspruch 12 oder 13, mit benachbart zum Vakuumtisch (3) angeordneten Transportrollen (4.1, 4.2), wobei der Vakuumtisch (3) so zwischen den Transportrollen (4.1, 4.2) liegt, dass die beschichtete Polymerfolie (1) parallel zur Oberfläche des Vakuumtisches (3) über die Transportrollen (4.1, 4.2) abschnittsweise auf- und abgerollt werden kann, wobei sich die Transportrollen (4.1, 4.2) bevorzugt außerhalb der Kammer (10) befinden.

15. Verwendung einer Vorrichtung nach Anspruch 12 zum Entschichten einer beschichteten Polymerfolie (1) mittels Lasern.

## Claims

1. Process for producing a laminated glass pane made up of a base pane (15), a first laminating film (16), a coated polymer film (1) with a coating (1.2), a second laminating film (17), and a cover pane (18) with at least one sensor window (19) comprising the steps a) through d), wherein
a) the coated polymer film (1) is tensioned by way of a vacuum table (3) overlaid with one or a plurality of glass plates, wherein the coating (1.2) points away from the vacuum table,
b) at least one decoated region (1.3) is produced on the coated polymer film (1) by means of laser treatment, wherein the coated polymer film (1) is decoated by means of at least one 2D laser scanner (5.1, 5.2) or 3D laser scanner (13) that is arranged perpendicular to the coated polymer film (1), wherein the coating (1.2) of the coated polymer film (1) points in the direction of the laser scanner (5.1, 5.2, 13).
c) the first laminating film (16) is arranged on the base pane (15), the coated polymer film (1) is arranged on the first laminating film (16), the second laminating film (17) is arranged on the coated polymer film (1), and the cover pane (18) is arranged on the second laminating film (17), and
d) the arrangement is autoclaved,
wherein the decoated region (1.3) is produced above glass plates (2.1, 2.2) with which the vacuum table (3) is covered.

2. Process according to claim 1, wherein the vacuum table (3) is operated with a swivel arm (3.3), with a first plate (3.2) mounted on the swivel arm (3.3), and with a second plate affixed (3.1) on the first plate (3.2).

3. Process according to claim 1 or 2, wherein the vacuum table (3) is arranged vertically.

4. Process according to claim 2, wherein the vacuum table (3) is operated with glass plates (2.1, 2.2) inlaid in countersinks (25.1, 25.2) of the second plate (3.1).

5. Process according to one of claims 1 through 4, wherein the glass plates (2.1, 2.2) are affixed with an adhesive from the group epoxy resins, polyurethane adhesive, silicones, cyanoacrylate adhesives, and/or mixtures thereof, particularly preferably epoxy resins.

6. Process according to one of claims 1 through 5, which runs continuously by rolling off the coated polymer film (1) from the transport rollers (4.1, 4.2), wherein
m) the coated polymer film (1) is rolled off over two transport rollers (4.1, 4.2) over the length of the vacuum table (3), wherein the transport rollers (4.1, 4.2) are placed adjacent to the vacuum table (3), wherein the vacuum table (3) table located between the transport rollers such that the coated polymer film can be rolled off and on parallel to the surface of the vacuum table by the transport rollers,
n) the transport rollers (4.1, 4.2) are stopped,
o) a negative pressure is applied between the vacuum table (3) and coated polymer film (1) via the vacuum nozzles (14) of the vacuum table (3) and the coated polymer film (1) is tensioned,
p) at least one decoated region (1.3) is produced on the coated polymer film (1) in the region of the glass plates (2.1, 2.2) by means of laser treatment,
q) the vacuum table (3) is aerated, and
wherein the particles generated by the laser procedure are removed by a particle suction system (12).

7. Process according to one of claims 1 through 6, wherein the laser treatment is performed in a chamber (10) with a protective gas atmosphere, containing nitrogen and/or argon and/or mixtures thereof.

8. Process according to claim 7, wherein the coated polymer film (1) is decoated with a wavelength of 300 nm to 1300 nm.

9. Process according to one of claims 1 through 8, wherein the coated polymer film (1) is used with polyethylene terephthalate, polyethylene, polypropylene, polycarbonate, polybutylene terephthalate, polyethylene terephthalate, and/or mixtures and/or copolymers thereof and the coating (1.2), is preferably a metal coating comprising silver, gold, copper, indium, tin, zinc, rhodium, platinum, palladium, and/or mixtures and/or alloys thereof.

10. Process according to one of claims 1 through 9, wherein at least 80 percent by weight, preferably at least 90 percent by weight of the coating (1.2) is removed in the decoated region (1.3).

11. Process according to one of claims 1 through 10, wherein the decoated region (1.3) has, in the wavelength range from 300 nm to 1300 nm a mean transmission for electromagnetic radiation of at least 75 %, preferably at least 85 %.

12. Device for laser treating a coated polymer film (1) comprising
r) a vacuum table (3) including a swivel arm (3.3), a first plate (3.2) affixed on the swivel arm (3.3), a second plate (3.1) affixed on the first plate (3.2),
s) at least one glass plate (2.1, 2.2) inlaid in the second plate (3.1) of the vacuum table (3), and
t) a 3D laser scanner (13) or at least one 2D laser scanner (5.1, 5.2), which is aimed perpendicular to the surface of the vacuum table (3) and whose operating area covers at least the region of the glass plates (2.1, 2.2).

13. Device according to claim 12, which is arranged in a chamber (10) with a protective gas atmosphere.

14. Device according to claim 12 or 13, with the transport rollers (4.1, 4.2) placed adjacent to the vacuum table (3), wherein the vacuum table (3) table located between the transport rollers such that the coated polymer film can be rolled off and on parallel to the surface of the vacuum table by the transport rollers, which are preferably situated outside the chamber (10).

15. Use of a device according to claim 12 for decoating a coated polymer film (1) by means of laser treatment.

## Revendications

1. Procédure de production d'un vitrage feuilleté à partir d'une plaque de base (15), d'un premier film de laminage (16), d'un film polymère revêtu (1) avec un revêtement (1.2), d'un deuxième film de laminage (17) et d'une plaque de recouvrement (18) avec au moins une fenêtre de capteur (19) comprenant les étapes de a) à d), où
a) le film polymère revêtu (1) est tendu sur un plateau sous vide avec une ou plusieurs plaques de verre (3) où le revêtement (1.2) est orienté éloigné de la plaque sous vide,
b) au moins une région décapée (1.3) est générée, au moyen de lasers, sur le film polymère revêtu (1), où le film polymère (1) est décapé au moyen d'au moins un scanner laser 2D (5.1, 5.2) ou d'un scanner laser 3D (13), qui sont disposés verticalement par rapport au film polymère revêtu (1), où le revêtement (1.2) du film polymère (1) est orienté vers le scanner laser (5.1, 5.2, 13).
c) le premier film de laminage (16) est disposé sur la plaque de base (15), le film polymère revêtu (1) est disposé sur le premier film de laminage (16), le deuxième film de laminage (17) est disposé sur le film polymère revêtu et la plaque de recouvrement (18) est disposée sur le deuxième film de laminage (17), et
d) la configuration est traitée en autoclave,
où la région décapée (1.3) est générée sur les plaques de verre (2.1, 2.2), qui occupent le plateau sous vide (3).

2. Procédure selon la revendication 1, où le plateau sous vide (3) est opéré avec un bras pivotant (3.3), avec une première plaque (3.2) sur le bras articulé (3.3) et une deuxième plaque (3.1) attachée à la première plaque (3.2).

3. Procédure selon la revendication 1 ou 2, où le plateau sous vide (3) est disposé verticalement.

4. Procédure selon la revendication 2, où le plateau sous vide (3) est opéré avec des plaques de verre (2.1, 2.2) insérées dans des fraisages (25.1, 25.2) dans la deuxième plaque (3.1).

5. Procédure selon l'une des revendications 1 à 4, où les plaques de verre (2.1, 2.2) sont fixées avec un adhésif pris dans le groupe des résines époxy, colles polyuréthanes, silicones, colles cyanoacrylate et/ou des mélanges de ceux-ci, de manière particulièrement préférée des résines époxydes.

6. Procédure selon l'une des revendications 1 à 5, qui se déroule de façon continue par le déroulement du film polymère revêtu (1) des rouleaux de transport (4.1, 4.2), où m) le film polymère revêtu (1) est déroulé sur deux rouleaux de transport (4.1, 4.2) sur toute la longueur du plateau sous vide (3), où les rouleaux de transport (4.1, 4.2) sont disposés adjacents au plateau sous vide (3) où le plateau sous vide (3) se trouve entre les rouleaux de transport (4.1, 4.2) de telle manière que le film polymère revêtu (1) se laisse enrouler et dérouler sur les rouleaux de transport (4.1, 4.2) parallèle à la surface du plateau sous vide (3),
n) les rouleaux de transport (4.1, 4.2) sont arrêtés,
o) un vide est créé entre le plateau sous vide (3) et le film polymère revêtu (1) par le biais des buses d'aspiration (14) du plateau sous vide (3) et le film polymère revêtu (1) est tendu,
p) sur le film polymère revêtu (1) dans la région des plaques de verre (2.1, 2.2) au moins une section décapée (1.3) est générée au moyen de lasers,
q) le plateau sous vide (3) est aéré, et
où les particules générées par l'action des lasers sont éliminées par le biais d'un système d'extraction de particules (12).

7. Procédure selon l'une des revendications 1 à 6, où le passage du laser est effectué dans une chambre (10) avec une atmosphère inerte, contenant de l'azote et/ou de l'argon et/ou des mélanges de ceux-ci.

8. Procédure selon la revendication 1, où le film polymère revêtu (1) est décapé à une longueur d'onde de 300 nm à 1300 nm.

9. Procédure selon une des revendications 1 à 8, où sont utilisés pour le film polymère revêtu (1) du polytéréphtalate d'éthylène, du polyéthylène, du polypropylène, du polybutylène téréphtalate, du polycarbonate, du polynaphthalate d'éthylène et/ou des mélanges et/ou des copolymères de ceux-ci et le revêtement (1.2) est de préférence un revêtement métallique comprenant de l'argent, de l'or, du cuivre, de l'indium, de l'étain, du zinc, du rhodium, du platine, du palladium et/ou des mélanges et/ou ou des alliages de ceux-ci.

10. Procédure selon l'une des revendications 1 à 9, où dans la région décapée (1,3) au moins 80% en poids, de préférence au moins 90% en poids, du revêtement (1.2) est enlevé.

11. Procédure selon l'une des revendications 1 à 10, où la transmission moyenne du rayonnement électromagnétique dans la gamme de longueur d'onde de 300 nm à 1300 nm dans la région décapée (1.3) est au moins 75%, de préférence au moins 85%.

12. Dispositif pour le décapage par laser d'un film polymère revêtu (1) comprenant,
r) un plateau sous vide (3), contenant un bras pivotant (3.3), une première plaque (3.2) montée sur le bras pivotant (3.3), une deuxième plaque (3.1) attachée à la première plaque (3.2),
s) au moins une plaque de verre (2.1, 2.2) inséré dans la deuxième plaque (3.1) du plateau sous vide (3), et
t) un scanner laser 3D (13) ou au moins un scanner laser 2D (5.1, 5.2) qui est aligné perpendiculairement à la surface du plateau sous vide (3) et dont la zone d'opération couvre au moins la zone des plaques de verre (2.1, 2.2).

13. Dispositif selon la revendication 12, qui est disposé dans une chambre (10) avec une atmosphère inerte.

14. Dispositif selon la revendication 12 ou 13, avec des rouleaux de transport (4.1, 4.2) positionnés adjacents au plateau sous vide (3), où le plateau sous vide (3) se trouve entre les rouleaux de transport (4.1, 4.2) de telle manière que le film polymère revêtu (1), parallèle à la surface du plateau sous vide (3), se laisse enrouler et dérouler sur les rouleaux de transport (4.1, 4.2) par segments, où les rouleaux de transport (4.1, 4.2) sont situés de préférence (10) à l'extérieur de la chambre.

15. Utilisation d'un dispositif selon la revendication 12 pour le décapage au moyen de lasers d'un film polymère revêtu (1).
